# EUROPEAN PATENT SPECIFICATION

(11) **EP 1 672 214 B1**
(45) Date of publication and mention of the grant of the patent: **27.02.2008**
(21) Application number: 04028646.0
(22) Date of filing: 03.12.2004
(51) Int. Cl.: F03D 3/06, F03D 3/00

(54) **Vertical axis wind turbine with control system steering kites**
Windturbine mit senkrechter Drehachse mit einem Steuersystem für Drachen
Éolienne à axe vertical avec dispositif de contrôle pour des ailes

(43) Date of publication of application: 21.06.2006
(73) Proprietor: Ippolito, Massimo, 10023 Chieri TO (IT)
(72) Inventor: Ippolito, Massimo, 10023 Chieri TO (IT)
(74) Representative: Garavelli, Paolo

(56) References cited:
- WO-A-20/04044418
- DE-A1- 2 839 918
- FR-A- 2 766 241
- US-A- 3 924 827
- US-A1- 2003 066 934
- US-B1- 6 254 034
- ANONYMOUS: "Advanced Hybrid Mechatronic Materials" INTERNET ARTICLE, [Online] 25 September 2004 (2004-09-25), XP002343492 Retrieved from the Internet: URL:http://web.archive.org/web/20040925005 901/http://sequoiaonline.com/> [retrieved on 2005-09-05]
- M. IPPOLITO: "The KIWIgen Project - Kite Wind Generator" INTERNET ARTICLE, [Online] XP002343508 Retrieved from the Internet: URL:http://europa.eu.int/comm/research/ene rgy/pdf/other_res_02ippolito.pdf> [retrieved on 2005-09-05] & 'Renewable energy technologies and socio-economic tools infoday' Sheraton Brussels Airport Conference Centre, 19 October 2004 'Wind converters', M. Ippolito

## Description

The present invention refers to a smart control system adapted for converting energy by exploiting the characteristics of generic kites or airfoils, allowing to develop high potential power plants.

The field of this invention relates to devices that convert wind energy, more specifically a device that control flying/gliding structures linked, through lines, on a ground frame that convert the mechanical energy typically into electrical energy.

The most relevant prior art documents in this field are: US-A-3924827, US-A-3924827, US-A-4076190, US-A-4124182, US-A-4251040, US-A-4659940, CN-A-1052723, US-A-5056447, US-A-5533694, US-A-5931416, US-A-6072245, US-A-6254034, and US-A-6523781. Other prior art documents are: DE 2839918 1980-03-27 HERTER, ERICH
XPxp002343492-URL: http://web.archive.org/web/20040925005901/http://sequoiaonline.com/>
XP002343508-URL:http://europa.eu.int/comm/research/energy/pdf/other_res_02ippolito.pdf> & "Renewable energy technologies and socio-economic tools infoday", 19 October 2004, "Wind converters", M. Ippolito
This document discloses a system for converting kinetic energy from winds into electric energy. The system comprises a plurality of kites, which are controlled through servo-actuators and sensors. The plurality of Kites is connected to a rotating circular base.

All these patents disclose devices for collecting altitude wind energy using airfoil, kites, gliders etc. The older and most relevant patent explaining the opportunity to harness energy from altitude wind through kites or airfoils is US-A-3987987 in the name of MCCUTCHEN PAYNE, which depicts the preliminary idea, and then several evolutions are possible. Some patent describe method exploiting the airfoil drag force, other (US6523781 Ragner) claims that the lift force is higher and also higher the collectable energy density.

The applicant avoids claiming features of the airfoil or kite physics, which are already fully disclosed in the aeronautical and windmill science.

The present patent can be considered similar in the sense that the keywords are the same: wind, airfoils, energy etc., but it propose and claims a specific and originally designed machine complete of detailed solution that can lead directly to a new category of exploitable wind generator.

The applicant agrees the general principles enough disclosed by the previous works and patents.

The US6072245 Ockels patent, is qualitatively similar to this patent, it go in detail describing the whole and specific wind harnessing machine that could lead to an exploitation. The Ockels machine is different by the one described in the present applicant invention and also the features and functioning characteristics are different.

For these reason this chapter of prior art will not compare the existing patents or the prior art with the present invention, considering the present invention is yet another wind machine, with a new and original approach to realize an high altitude wind, harnessing machine. The invention aims at improving prior art system of converting wind energy. This is achieved with a system according to claim 1.

### Summary

KiWiGen is focused on the development of a troposphere wind generator, hereafter called kite wind generator KiWiGen. The concept is quite simple, as are all truly imaginative ideas: to take advantage of the astounding force of the wind by developing a new method to capture it, which would entrap a far greater quantity, than the present day windmills. To do this one must attain a much higher altitude, reaching the winds that blow continually and reliably several hundred meters above sea level. The means is a series of wide kites, somewhat similar to gliders, which are linked one above another in tandem. Thrust across the horizon in a huge arc, they act as a net. In this manner they trap a vastly larger wind front than the mills of a conventional wind farm.

Moreover, it is necessary to control the kites, so that they are always flying in a manner that best captures the varying intensity and direction of the wind. This is where the applicant has developed the hypothesis. The applicant realized that their proprietary Tri-Axial Acceleration Computers, (SeTAC) which they have designed and manufactured for three years for purposes of industrial automation and avionic applications, could be used as the groundwork for a three-dimensional control system. The KiWiGen's sensors will 'feel' the location of the kites in the sky and modify their position, angle and tension, enabling them to engulf the greatest wind force. Another major breakthrough is in the physical design of the system. The kite arrays are mounted on a moving frame resembling a Carousel. This circular tensor structure rotates around a vertical axis, whose pivotal centre is geared with a conventional alternator. In effect, it is a very lightweight, giant merry-go-round, 'powered' by the kites strung in tandem, up to an altitude several times higher than the conventional windmills. At this height, in optimum conditions, the kites can reach a speed that allows realising a lift-harnessing machine instead of a drag machine. As the wind lifts and thrusts the kites into the wild blue yonder, the kite arrays come into contact with a much greater volume of wind. The Carousel system should be able to generate an amount of electrical energy equivalent to the output of an entire conventional power plant, unimaginable by other methods.

### Detailed engineering description

### General approach

The KiWiGen will deal with more interdisciplinary aspects, i.e. the wind and airfoils aerodynamics plus sophisticated control mechatronics.

For the wind and airfoils aerodynamics part, the applicant assumes that the research and consequently the market already offer special kites. They are categorised as power kites with an important background of included research and characteristics, which are suitable for this implementation as component. Consequently, the patent is mainly focused on the description of the control apparatus, which can be conceptually divided in sensor systems, actuation hardware on the ground and at the kite, plus the controlling software.

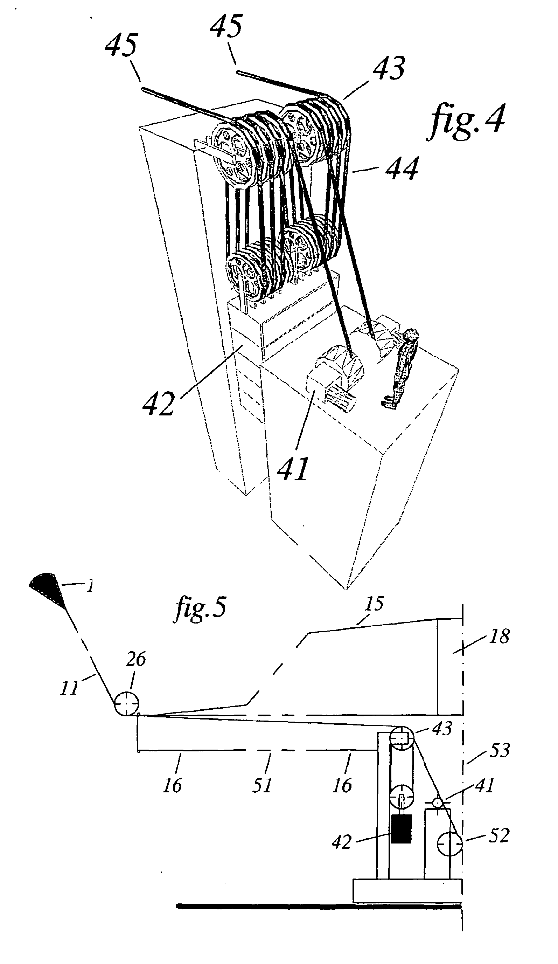

A special set of wind self-powered sensors; such as the tri-axial accelerometers/inclinometers is the kite's onboard equipment in wireless connection with the KSU [fig 4].

From the hardware point of view, part of the technology is borrowed from the robotics field, by deeply exploiting servo motors-drives and numerical controls.

### Kites

The Kite [31] is the interface between the natural wind energy and the harnessing machine.

By capturing the wind kinetic energy, kites are able to supply a massive quantity of mechanical energy, which comes from the traction force exerted on the cable [11], and multiplied by kite's arbitrary displacement. Thanks to the latest aerodynamic studies and applications, kites can provide particular features in terms of manoeuvrability and control, while the energy transferred from the wind can be modulated due to the kite manoeuvrability. Specific diagrams depict the maximum power and the stall areas of the kite in relation to the wind. Therefore, by steering the kite appropriately, it is possible to navigate the airspace modulating the condition of maximum power of traction and the directions.

Kites could be assembled in tandem arrays [12] in order to improve the total airfoil area.

One of the most important KiWiGen breakthrough is the two wire kite steering and the absence of any kind of mechanism in the flying structure; thanks to the control strategy the kite attitude control is unnecessary.

### On board instrumentation

The applicant's patented Tri-Axial Acceleration Computers (SeTAC) [84] which has been designed and manufactured for many years for purposes of industrial automation and avionic applications, can be used as the groundwork for a three-dimensional control system. A special version of self-powered SeTAC [81], such as the tri-axial accelerometer/inclinometer, is the kite's onboard equipment in wireless connection with the KSU [fig. 4].

The SeTAC will be mounted aboard of the kite and powered with flexible solar panel [83]; a little and light accumulator [82] will provide the transmission and sensor power supply energy, even nighttime.

The self-powering is also required to avoid conductive paths for electrostatic atmospheric charge between the altitude air masses and the ground.

The KiWiGen's sensors will 'feel' the location of the kites in the sky in order to modify their position, angle and tension, enabling them to engulf the greatest wind force.

### Kite steering unit [fig. 4]

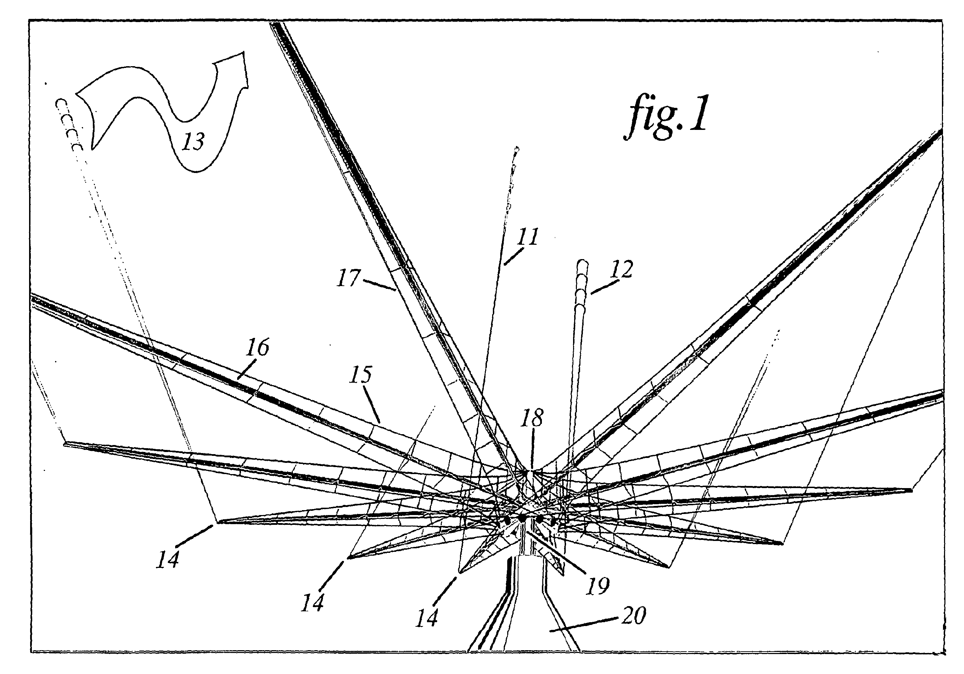

The Kite steering unit is the subassembly composed by the high strength actuators [41], the high speed actuators [52], the numerical control completed by the control software, and a frame hosting these components. Several KSUs hosted in the pivotal centre [19] will become components in the wider embodiment called Carousel [fig. 1].

### The control software

It is the core that makes feasible the invention and must be built with perception-based decision making, motion and force modelling of the kite in the airspace. An analytical approach is adopted to set-up the special algorithms. Remote interfacing of the numerical control is the main feature on which the method for setting-up the knowledge and the ability for automatic kiting is based.

This knowledge is comprehensive of a correct reaction to unforeseen events and to natural wind variations this ability will be empowered by a special mechanical feature of the KSU that implement a kite force counterweight [42] in order to stabilise all the physic parameter involved in the kite steering.

The kite generator controller acquires the skill and copies the behaviour of a trained person driving acrobatic kites. This result will be achieved mainly by an analytical approach means that the system is described and controlled by a set of specially designed algorithms, providing feedback on the lines through the winch/reels [41], on the basis of the data collected by the sensors, This software can be scaled at different levels of coding difficulty and efficiency in exploiting the wind. On one side, an easier coding can behave in conservative mode, by improving the operational determinism. On the other side, the software complexity can be forced towards acrobatic performance, thereby improving the energy collection attitude. In any case, the computing power available in current microprocessors can support every level of real time software complexity and resource demands; certainly enough to outperform humans in providing fast and calibrated retro-actions.

### Numerical control

The kite generator KSU has a functional diagram very similar to that of an industrial machine. It can use standard components of the technology employed in the realisation of the electromechanical group, including servo-drives, servomotors and encoders. The typical electronic hardware that controls all the component chain is a multi axial numerical control.

The numerical control could be supported by an additional computing capability to perform the real-time three dimensional model emulation of the kite in airspace. The running software model drives the KiWiGen physical behaviour through the numerical control.

### Actuators

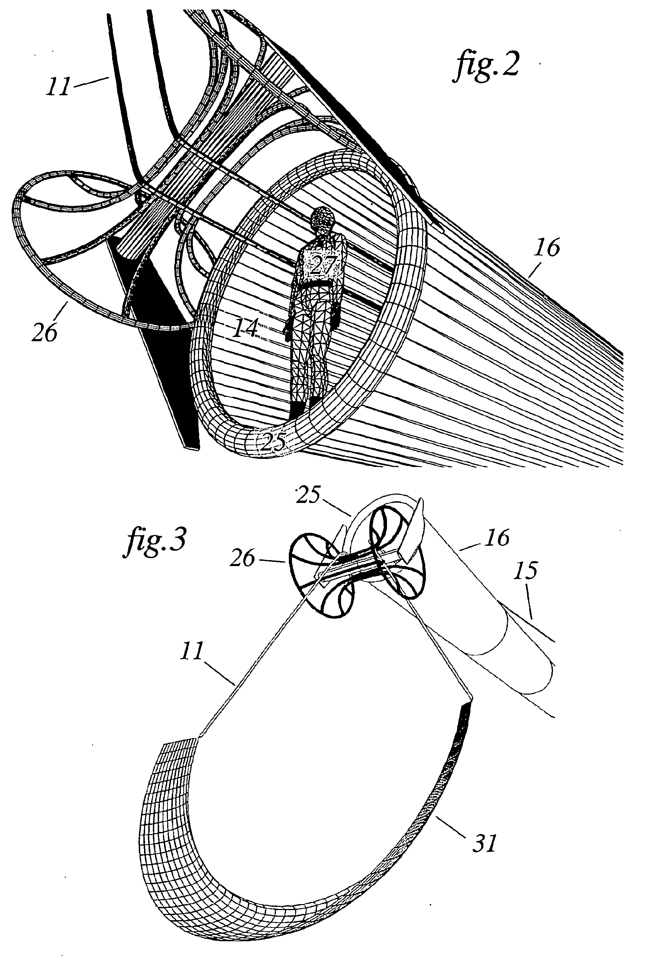

The KSU, modifying the traction/force balance on the kite lines, will implements the kite steering capability. The kites, in particular in the tandem assemblies, excerpt a traction that could be in the mega Newton range, the steering unit deal with this force trough a primary winch [41] with such torque capability. But a reduction gear with that performance greatly reduces the actuation speed, which sometimes is required for fast reaction to wind gust or for emergency retraction. Two subsystems provide the fast actuation for the two situations: the passive counterweight actuator [42] for the wind fast adaptive control and the in series lower force high-speed winch for the fast retraction or to glide home the kites [fig. 3].

### Passive counterweight actuator

The Passive counterweight is the lines tension/force passive stabilizer obtained by a suspended counterweight [42] and a series of de-multiplying pulley [43] to amplify the running extension of the kite lines, compared to the counterweight vertical and gravitational translation.

In case of wind gust or instant wind absence this device react properly maintaining the force on the lines for enough time to make the whole system insensitive to the event or allowing the active actuator to drive the proper reaction in time.

The weight of this device is proportional to the maximum force expected by the kites multiplied by the number of the de-multiplying pulleys [44].

### Emergency retracting secondary actuator

The primary winch [41] acts in series with the secondary winch [52], that is uniquely used for reeling-in the kites' lines in fast mode, useful for emergency retraction or to glide home the kites [fig. 3]. The primary winch has a one-way rotation clutch that controls with great force the reeling-out of the lines and makes free the retraction actuated by the secondary winch.

This function could be even obtained by a multi speed geared winch, but the extreme difference of the two situations makes unpractical the adoption of such device.

### Carousel [fig. 1]

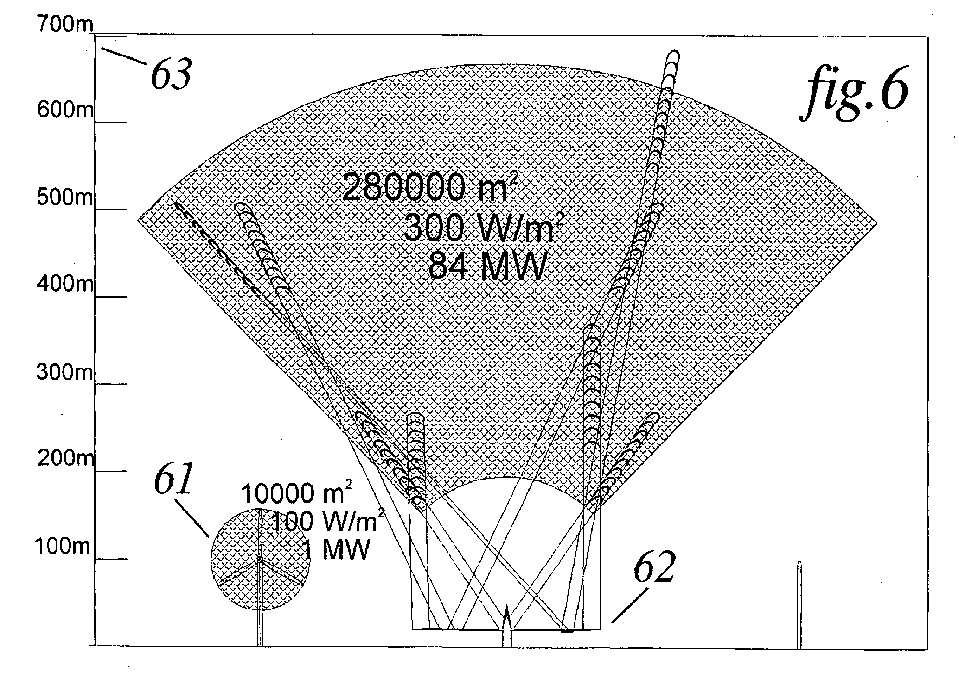

The KiWiGen Carousel generator is a horizontal circular tensor-structure turning on a vertical axis [53], whose pivotal centre [19] is geared with a conventional alternator [20]. Several KiWiGen KSUs control the kite tandems [12] linked to the peripheral edge [14]. The carousel embodiment overcomes any limitation that could be imposed to the whole generator size. Kites sweep large sections of the wind front by increasing the energy collection area [fig. 6]. In order to reach an installed power of about one GigaWatt (like the one provided by a medium sized nuclear power plant), the diameter of the frame has to be about one thousand meters. However, the construction challenge is similar to the constructions managed by the civil engineering technologies. More, the territorial impact can be reduced by offshore installations. In any case a comparison with the current windmills states that the territory occupation is 200 times less for the Carousel.

The most important feature of the Carousel is the capability to host the retracted kites even in tandem array directly in Carousel frame. Kites are retired from wind and they could be accessed for maintenance, substitutions etc.

The elevation of the peripheral edge of the carousel is dimensioned to make easy and economical the construction and allow at least one kite suspended at the nozzle [14] without touching the ground [fig. 3].

### Takeoff

An actual breakthrough of the applicant invention is the opportunity to realise a totally automatic or remote controlled power plant. In condition of stand-by when the kite tandem assembly is retired into the frame [fig. 3], the topmost kite could be exposed to the breeze waiting for enough wind to start the procedure of launch.

The topmost kite could extract, thanks to the wind force, the other kites from the carousel frame, then when all the train is flying they could reach the operating position in the sky [13].

The carousel can supplement the kite's automatic take-off phase even in conditions of low ground wind with a grid powered rotation that procures tangential apparent wind enough to start the take off of the kites, thus reaching a productive altitude.

When the topmost kite is exposed to the breeze in the stand-by situation could happen that the slight and disordered wind act forces to twist the lines of the fallen and suspended kite, but also in this situation the kite position is measured by the sensors and then controlled by the feedback loop.

### Kite path in airspace

During the operativity each kite array follows a complex path in the sky, kites run at a speed that is much higher than the Carousel tangent edge or the nozzles [14] that are the kites lines outlet. The developed path could be several times the circumference of the carousel. This feature gives to control a great freedom to choose instant after instant the most productive angles between the kites and the wind. In this phase the position of the passive counterweight actuator [42] is totally controlled by the kites. The counterweight actuator is also the energy reserve to allow a stable kites navigation not only in case of turbulence but also in directions against the wind. This feature optimally administrated by the control allows rapid inversions of direction. Running most time in one direction on the beam followed by a fast gybe then on the beam in the opposite direction followed by a tack manoeuvre and again from the beginning composes the more productive path (on the beam, gybe, tack are corresponding nautical navigation terms).

In the airspace kites have one more dimension available than the nautical equivalent navigation.

### Scalability

The KiWiGen carousel could be dimensioned for relatively small plants to very large scale application with minor adaptations. It is possible to build a system with an arbitrary number of kites or kites in tandem assemblies, the area of each wing can vary form few to hundred of square meters without loosing the kite's control capability.

It is not required to over-dimension the components to gain a security margin and unnecessary fatigue resistance, because in case of impulsive strong winds the KiWiGen KSU react reeling out the lines, thereby reducing the apparent wind acting on the wing. The lightweight of the flying structure provides the flexibility to handle local turbulence. The intercepted wind front can easily reach an area of a million of square meters with a specific architecture and feasible, quite ordinary structures. According to the Betz law the maximum power subtracted to the wind is attained braking the air mass to 1/3 of the it original speed; the KiWiGen can be optimised to fulfil the requirement regulating the number of kites in a tandem, the size of the kites, the sweeping speed, the number of tandem concurrently operative on the Carousel frame.

### Offshore, onshore

The KiWiGen can operate either in offshore and onshore installations, typically the ground wind is stronger on the sea, it is expected that this will affect only the take off procedure because when the kites reach the operating altitude the difference between the ground and the altitude wind is slight.

### Fog and typhoon

The KiWiGen could have a useful effect on local weather, in the two extreme situations fog and violent storm. The former is a situation of null wind at the ground level. The Betz law explains that the wind stream behind the turbine is affected by an increased front size this could be exploited by the KiWiGen to bring some altitude wind at the ground level providing the opportunity to clean from the fog wide territory.

In the other case with very strong wind like during tornados the KiWiGen can deal with the gigantic power choosing a set smaller and faster kites.

These storm kites will maintain the manoeuvrability even in extreme situations. The continuous wind power subtraction operated by the KiWiGen could be in the order of magnitude of the storm giving a great opportunity to rescue the involved lands.

### Drawing summary

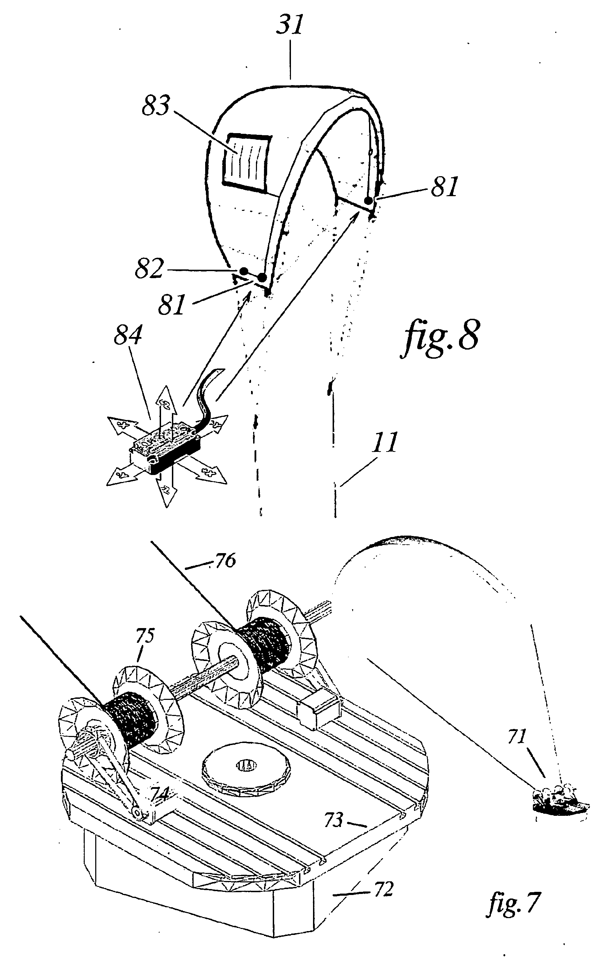

**Fig 1** **KiWiGen Carousel**
   11 steering/power lines or cables
   12 Kites in tandem array
   13 Kites path in airspace
   14 Carousel nozzles
   15 suspension cable
   16 Carousel arm, an element of the stellar frame
   17 Brace cables. The kite's forces are mainly discharged on these cables that impress the rotation power to the central pivot
   18 Carousel tower is the column sustaining all the suspension cables
   19 Central Pivot fulfils the functions of support-bearing for the whole system and hosts the gearing to the electrical generator or alternator
**Fig. 2** **KiWiGen Carousel Nozzle**
   25 Bearing allowing the radial rotation of the pulley
   26 Birotative Pulley following lines slant
   27 Man silhouette as evidence for dimensions and accessibility
**Fig. 3** **No Wind situation**
   31 Topmost kite exposed to the breeze waiting for takeoff
**Fig. 4** **A perspective view of the KSU kite steering unit**
   41 High force winch
   42 Counterweight
   43 Pulley
   44 De-multiplying pulleys set
   45 Steering power lines to the nozzle and than to the kite array
**Fig. 5** **half section of the KiWiGen carousel**
   51 drawing snip implying arm lenght
   52 high-speed winches/actuators
   53 Rotation axis
**Fig. 6** **Comparison between equivalent total weight windmill and KiWiGen. The hatching** represents the windfront.
   61 conventional windmill
   62 KiWigen Carousel front view
   63 Altitude scale
**Fig. 7** **KSU simplified concept**
   71 Pictorial drawing
   72 Basement
   73 Rotating table
   74 Brushless motor
   75 Reel
   76 Lines directly to kite
**Fig. 8** **The kite with the onboard instrumentation and power supply**
   81 Radio inclinometer/accelerometer SeTAC
   82 Accumulator
   83 Flexible photovoltaic solar panel
   84 SeTAC enlargement

### Field testing, validation and risk assessment

The aerial part of the kite generator, composed by the ultra light wings and lines, can reach heights of a thousand of meters. This could produce some concerns about the safety of the whole system. The prototype will be useful for exploring in depth all the relevant aspects, but several questions and consideration can be foreseen in advance and many possible answers are already available.

### Project risk, safety improvement

**Risk -** The tests reveals a generic lack in the design or in the device's expected functionality.
**Solution -** The partners are confident that all project assumptions are realistic. However, the KiWiGen project is not impotently safeguarded from the risks of failure or unforeseen factors taking place. In the case that this unlikely event occurs, investigation will be aimed at identifying the sources of the problem and prompt corrective actions will be studied in order to avoid a delay in meeting the project objectives.

**Risk -** Current legislation does not allow for occupying the airspace for testing the demonstrator, and the competent authority does not provide special licenses.
**Solution -** The prototype will be tested in aerostatics and stratosphere balloon ground-fields and in occasion of wind manifestations. Whether the results gained comply with present expectations, inputs and proposals for new regulatory measures will be provided. At present a test area in the north of the Netherlands is available, including the support of the local authorities, allowing for tests up to several hundreds of meters.

### Technical risk

**Risk -** The sensors, as well as the inertial platforms, have to provide all the information on acceleration, velocity and position of the kites in airspace. The measurement precision may result inadequate due to the required mathematical signal integration.
**Solution -** The traction cables can supply on the ground site the angular position, whereas the reel encoder can provide the distance of the kite, by making available an alternative position data source.

**Risk -** Failures during the flight may take place, for example during the software development, testing and validation phases.
**Solution -** An adequate number of sensors will be employed in order to always have backup devices in case of abnormal functioning and to ensure the full control of the system. Any problem will be already detected during the second phase of the instrumental flight

**Risk -** Wireless communication between the kite and the KSU does not work due to the distance
**Solution -** Different ways for communication will be studied (through VHF radio, cable, laser...)

### Security and safety Issues

**Risk -** Safety issues can be raised by the cables. They are the components in which all the wind force is concentrated. During an anomalous ground sweep they could hit persons and objects.
**Solution** - An automatic clutch disjoint system can be integrated on one cable only in order to deflate kite and be operated wireless. This system can work even in tandem assemblies.

**Risk -** Motor power and/or speed may result inadequate to face strong wind by issuing the reaction on time
**Solution -** The employment of different and more powerful motors will be considered.

**Risk -** The wing and the lines could fall down onto neighbour's lands, due to the absence of wind
**Solution -** the control capabilities achieved through elaboration of the input signal provided by the sensors allow rewinding the lines fast enough to glide the kite home.

**Risk-** the wind could be so strong as to stretch or tear a line.
**Solution -** The control allows for more speed in reeling out the lines, in order to reduce the apparent wind acting on the kite.

**Risk -** a plane or a helicopter could collide with the wings or the lines
**Solution -** The control scans the sky with radar and, in case of collision route, rewinds the kite to a safe altitude in a few seconds

**Risk -** The KSU, in particular the kite lines could be subject to vandalism and/or terrorist attacks.
**Solution -** Some of the embodiments presented could make the moving parts inaccessible.

### KiWiGen Gigawatt class example: required performances and effects

The extraordinary features of the recently developed cables (such as Dyneema®) offer the missing link needed to achieve the Gigawatt power: an example of which could be roughly some 40 MN (4000 tons) applied tangentially on the carousel generator at a speed of 25m/s.

By considering a system with 20 kites in tandem assemblies, the maximum force applied on each of the 40 cables is about 100 tons. That means a diameter of 20mm and a cable weight of 300 Kg per Km. Each tandem kites assemblies have to exert a traction of 200 tons, which means, by considering a tandem composed of 10 kites, 20 tons applied by each kite.

Therefore, a wind of 10m/s, that is the European medium value at 1500mt of altitude, contains about 1 kW per square meter. Assuming an efficiency factor of 40% and a sweep wind front surface of 1 square kilometre, the power generated could be 400MegaWatt.

Assuming a stronger wind with a 20m/s (70 km/h not rare in altitude) speed value as the power generated varies with the cube of the wind speed, the harnessed power can rise to 3 Gigawatt, against a total wind inertial power of 8 Gigawatt.

Everyone who approaches this new wind generator concept for the first time is fascinated and amused by the new perspective. However, everything becomes tremendously serious when a rough evaluation of the cost per installed Watt is performed and compared to the other power sources.

First calculations show that the investment cost is approximately 100 times lower than the one necessary for conventional generation plants. A comprehensive technical and economical documentation will be produced to verify the project premises and offer all the decision making tools for the project follow-up.

## Claims

1. System for converting kinetic energy from winds into electric energy, comprising a plurality of kites (31) adapted to get energy from winds and a plurality of winches (41) respectively connected to each one of said kites (31) through steering/power lines (11, 45) passing through a respective arm (16), each one of said winches (41) being connected to a motor (74) for providing electric energy, each one of said winches (41) being connected through a plurality of demultiplying pulleys (43, 44) to said steering/power lines (45) and a counterweight (42) connected to said plurality of pulleys (43, 44), said de-multiplying pulleys (43, 44) being adapted to amplify the running extension of the steering/power lines (45) compared to the translation of said counterweight (42), said kites (31) and said winches (41) being operatively controlled by a smart and adaptive control for their steering and manoeuvre according to direction, speed and force of winds, said control means being adapted to control the system on the basis of data collected by sensors (81, 84) placed on said kites (31), said smart and adaptive control being adapted to thereby rotate said winches (41) so that said kites (31) are oriented in order to receive a maximum force from winds, the pivotal centre of the system being geared with an alternator.

2. System according to claim 1, **characterised in that** said kites (31) are provided in a plurality of tandem arrays (12), each tandem array (12) being in turn connected to a respective nozzle (14), a plurality of said nozzles (14) being connected as a star in order to form a carousel-type system.

3. System according to claim 2, **characterised in that** said steering/power lines (11) connect said tandem arrays (12) to said nozzles (14), each one of said arms (16) containing at least one suspension cable (15) and at least one brace cable (17), forces of said kites (31) being discharged on said cables (15, 17) which impress a rotation power to a tower (18) of said carousel-type system, said system further comprising a central pivot (19) adapted to operate as support bearing for the whole system and to house the gearing to said alternator (20), said tower (18) being connected to said central pivot (19).

4. System according to claim 3, **characterised in that** it further comprises a bearing (25) adapted to allow the radial rotation of a birotative pulley (26) to which said kites (31) are operatively connected.

5. System according to claim 2, **characterised in that** said steering/power lines (45) are connected to each one of said nozzles (14) and said kites (31) of said kite arrays (12).

6. System according to claim 1, **characterised in that** said sensor (81, 84) is a self-powered tri-axial inclinometer (81, 84) on the flying structure of said kite (31), said inclinometer (81, 84) being used as five-axis sensor using the gravity acceleration as reference.

7. System according to claim 6, **characterised in that** it further comprises at least one accumulator (82) and at least one flexible photovoltaic solar panel (83) placed onto each one of said kites (31).

8. System according to claim 1, **characterised in that** said smart control of said kites (31) is adapted to transmit data in a wireless mode to said winch (41).

9. System according to any one of the previous claims, **characterised in that** said system has a low barycentre or centre of gravity, with its heavy structures and frames near to the ground and the ultra-light aerial part that can reach around a hundred meter without changing its centre of gravity, thereby enabling to build a system with huge dimensions.

## Patentansprüche

1. System für die Umwandlung der kinetischen Energie des Windes in elektrische Energie, mit zahlreichen leistungsstarken Flügelprofilen (31), die dazu dienen, Windenergie zu erzeugen, und zahlreichen Hebewinden (41), die entsprechend mit jedem leistungsstarken Flügelprofil (31) durch Steuer-/Kraftleitungen (11, 45) verbunden sind, welche einen entsprechenden Arm (16) durchlaufen, jede dieser Hebewinden (41) ist mit einem Motor (74) verbunden, um elektrische Energie zu liefern, jede der genannten Hebewinden (41) ist durch zahlreiche Untersetzungsscheiben (43, 44) mit den genannten Steuer-/Kraftleitungen (45) und einem Gegengewicht (42) verbunden, das mit den genannten zahlreichen Untersetzungsscheiben (43, 44) verbunden ist, die genannten Untersetzungsscheiben (43, 44) dienen zur Erweiterung des Weges der Steuer-/Kraftleitungen (45) im Vergleich zur Verschiebung des genannten Gegengewichtes (42), die genannten leistungsstarken Flügelprofile (31) und die genannten Hebewinden (41) werden operativ durch eine intelligente Adaptivsteuerung aufgrund ihrer Steuerung und Manöver gemäß der Richtung, Geschwindigkeit und Kraft des Windes kontrolliert, die genannten Steuervorrichtungen dienen dazu, das System auf der Grundlage der von den Sensoren (81, 84) gesammelten Daten zu kontrollieren, die auf den genannten leistungsstarken Flügelprofilen (31) angebracht sind, die genannte intelligente Adaptivsteuerung dient dazu, die genannten Hebewinden (41) so zu drehen, dass die genannten leistungsstarken Flügelprofile (31) so ausgerichtet werden, dass sie die max. Kraft des Windes erhalten, das Drehzentrum des Systems ist durch Getriebe mit einem Alternator verbunden.

2. System gemäß Patentanspruch 1, das **dadurch gekennzeichnet ist, dass** die genannten leistungsstarken Flügelprofile (31) in zahlreichen Reihen im Tandem (12) vorgesehen sind, jede Reihe im Tandem (12) ist ihrerseits mit einer entsprechenden Düse (14) verbunden, zahlreiche der genannten Düsen (14) sind in Sternenform verbunden, um ein System in Form eines Karussells zu bilden.

3. System gemäß Patentanspruch 2, das **dadurch gekennzeichnet ist, dass** die genannten Steuer-/Kraftleitungen (11) die genannten Reihen im Tandem (12) mit den genannten Düsen (14) verbinden, jeder der genannten Arme (16) enthält mindestens ein Aufhängungskabel (15) und mindestens ein Stützkabel (17), die Kräfte der genannten leistungsstarken Flügelprofile (31) werden auf die genannten Kabel (15, 17) entladen, die eine Drehkraft auf einen Turm (18) des genannten Systems in Form eines Karussells übertragen, das genannte System enthält außerdem einen mittleren Bolzen (19), der als Stützlager für das gesamte System dient und die Getriebe zum genannten Alternator (20) zu enthalten, der genannte Turm (18) ist mit dem genannten mittleren Bolzen (19) verbunden.

4. System gemäß Patentanspruch 3, das **dadurch gekennzeichnet ist**, außerdem eine Halterung (25) zu enthalten, die dazu dient, die Radialdrehung einer zweiseitig drehenden Scheibe (26) zu ermöglichen, mit der die genannten leistungsstarken Flügelprofile (31) operativ verbunden sind.

5. System gemäß Patentanspruch 2, das **dadurch gekennzeichnet ist, dass** die genannten Steuer-/Kraftleitungen (45) mit jeder der genannten Düsen (14) und den genannten leistungsstarken Flügelprofilen (31) der genannten Reihen der leistungsstarken Flügelprofile (12) verbunden sind.

6. System gemäß Patentanspruch 1, das **dadurch gekennzeichnet ist, dass** der genannte Sensor (81, 84) ein dreiachsiges selbstversorgendes Inklinometer (81, 84) an der Flugstruktur des genannten leistungsstarken Flügelprofils (31) ist, der genannte Inklinometer (81, 84) wird als Sensor auf fünf Achsen verwendet, der die Beschleunigung der Schwere als Bezug verwendet.

7. System gemäß Patentanspruch 6, das **dadurch gekennzeichnet ist**, außerdem mindestens einen Akkumulator (82) und mindestens ein flexibles photovoltaisches Solarpaneel (83) zu enthalten, das auf jedem der genannten leistungsstarken Flügelprofile (31) angebracht ist.

8. System gemäß Patentanspruch 1, das **dadurch gekennzeichnet ist, dass** die genannte intelligente Steuerung der genannten leistungsstarken Flügelprofile (31) dazu dient, in einer drahtlosen Modalität Daten an die genannte Hebewinde (41) zu übertragen.

9. System gemäß einem beliebigen der vorhergehenden Patentansprüche, das **dadurch gekennzeichnet ist, dass** das genannte System mit seinen schweren Strukturen und Rahmen nahe am Boden und dem ultraleichten Flugteil, der Hundert Meter der Umgebung erreichen kann, ohne sein Schwerezentrum zu ändern, einen niedrigen Schwerpunkt oder Schwerezentrum hat, wodurch es möglich wird, ein System mit enormen Dimensionen zu konstruieren.

## Revendications

1. Système pour convertir l'énergie cinétique en énergie électrique à partir des vents, comprenant une pluralité de profils alaires de puissance (31) capables de développer de l'énergie par exploitation des vents et une pluralité de treuils (41) reliés respectivement à chacun desdits profils alaires de puissance (31) à travers des lignes d'orientation / puissance (11, 45) passant à travers un bras (16) respectif, chacun desdits treuils (41) étant rattaché à un moteur (74) pour fournir l'énergie électrique, chacun desdits treuils (41) étant rattaché auxdites lignes d'orientation /puissance (45) à travers une série de poulies démultiplicatrices (43, 44) et un contrepoids (42) relié à ladite série de poulies (43, 44), lesdites poulies démultiplicatrices (43, 44) état capables d'amplifier l'extension des parcours des lignes d'orientation / puissance (45) vis-à-vis de la translation dudit contrepoids (42), lesdits profils alaires de puissance (31) et lesdits treuils (41) étant opérationnellement contrôlés par un contrôle intelligent et adaptatif pour leur orientation et leur manoeuvre suivant la direction, la vitesse et la force des vents, lesdits moyens de contrôle étant capables de contrôler le système en fonction des données recueillies par des capteurs (81, 84) installés sur lesdits profils alaires de puissance (31), ledit contrôle intelligent e adaptatif étant capable de faire tourner ainsi lesdits treuils (41) de manière à ce que lesdits profils alaires de puissance (31) soient orientés dans le but de recevoir une force maximale des vents, le centre de rotation du système étant relié à des engrenages avec un alternateur.

2. Système selon la revendication 1, **caractérisé en ce que** lesdits profils alaires de puissance (31) sont prévus dans une pluralité de files configurées en tandem (12), chacune des files en tandem (12) étant à son tour reliée à une respective tuyère (14), une pluralité de ces tuyères (14) étant regroupée en étoile dans le but de former un système du type à carrousel.

3. Système selon la revendication 2 **caractérisé en ce que** lesdites lignes d'orientation / puissance (11) relient lesdites files en tandem (12) auxdites tuyères (14), chacun desdits bras (16) contenant au moins un câble de suspension (15) et au moins un câble de soutien (17), les forces desdits profils alaires de puissance (31) se déchargeant sur lesdits câbles (15, 17) qui impriment un puissance de rotation à une tour (18) du système du type à carrousel, ledit système comprenant un pivot central (19) capable d'agir comme roulement de support pour tout le système et de loger les engrenages vers ledit alternateur (20), ladite tour (18) étant rattachée audit pivot central (19).

4. Système selon la revendication 3, **caractérisé en ce qu'**il comprend encore un support (25) prévu pour permettre la rotation radiale d'une poulie bi-rotative (26) à laquelle lesdits profils alaires de puissance (31) sont opérationnellement rattachés.

5. Système selon la revendication 2 **caractérisé en ce que** lesdites lignes d'orientation / puissance (45) sont reliées à chacune desdites tuyères (14) et chacun desdits profils alaires de puissance (31) desdites files de profils alaires de puissance (12).

6. Système selon la revendication 1, **caractérisé en ce que** ledit capteur (81, 84) est un inclinomètre triaxial autoalimenté (81, 84) sur la structure volante dudit profil alaire de puissance (31), ledit inclinomètre (81, 84) étant utilisé comme capteur sur cinq axes qui utilise l'accélération de gravité comme référence.

7. Système selon la revendication 6, **caractérisé en ce qu'**il comprend encore au moins un accumulateur (82) et au moins un panneau solaire photovoltaïque flexible (83) installé sur chacun desdits profils alaires de puissance (31).

8. Système selon la revendication 1, **caractérisé en ce que** ledit contrôle intelligent desdits profils alaires de puissance (31) est capable de transmettre audit treuil (41) les données dans un mode sans fils.

9. Système selon une quelconque des revendications précédentes, **caractérisé en ce que** ledit système possède un barycentre ou centre de gravité bas, avec structures et châssis lourds près du sol et la partie aérienne ultra légère pouvant atteindre une altitude de cent mètres environ sans modifier son centre de gravité, en permettant ainsi de construire un système de dimensions énormes.
